# EUROPEAN PATENT APPLICATION

(11) **EP 3 840 246 A1**
(43) Date of publication of application: **23.06.2021**
(21) Application number: 20200619.3
(22) Date of filing: 07.10.2020
(51) Int. Cl.: H04B 7/06, H04B 7/08, H04W 4/02, H04W 4/40

(54) **ANTENNA OPTIMIZATION BASED UPON MAP AND SENSOR DATA**

(30) Priority: 20.12.2019 US 201916723158
(71) Applicant: Aptiv Technologies Limited, St. Michael (BB)
(72) Inventor: Coon, Bradley S., Russiaville, IN 46979 (US)
(74) Representative: Manitz Finsterwald Patent- und Rechtsanwaltspartnerschaft mbB

(57) **Abstract**

A method of optimizing a sensor antenna for a vehicle (10) includes operating a sensor antenna using a first predetermined antenna beam pattern from a plurality of predetermined antenna beam patterns. A map location of a vehicle is determined, and a second predetermined antenna beam pattern is selected from the plurality of predetermined antenna beam patterns based upon the map location of the vehicle (10). The second predetermined antenna beam pattern is then used with the vehicle sensor (14).

## Description

### FIELD OF INVENTION

The disclosure relates to a system for optimizing an antenna beam of a vehicle sensor.

### BACKGROUND

Typical vehicle-to-everything (V2X) or vehicle-to-vehicle (V2V) transceivers employ horizontal omni-directional antenna beams to remain equally aware of other vehicles, structures and objects in all direction under all circumstances.

One proposed variation to omni-directional antenna beams uses map data to determine a roadway configuration, for example, a two-way divided highway, and to adjust the beam toward the front and the rear of the vehicle. The beam may also be switched to an omnidirectional mode when global navigation satellite system (GNSS) data indicates the vehicle is approaching an intersection. Vehicle sensor data may be used to adjust the antenna beam when braking or changing lanes.

The above-described system may also dynamically steer the beam to lock onto an object of interest once the object is detected. In this manner the beam of one or more V2X sensors may be continually shaped to track the object.

Another proposed approach uses vehicle cameras to determine when the vehicle is in an urban canyon and adjust the GNSS antenna pattern accordingly.

### SUMMARY

In one exemplary embodiment, a method of optimizing sensor antenna for a vehicle includes operating a sensor antenna using a first predetermined antenna beam pattern from a plurality of predetermined antenna beam patterns. A map location of a vehicle is determined, and a second predetermined antenna beam pattern is selected from the plurality of predetermined antenna beam patterns based upon the map location of the vehicle. The second predetermined antenna beam pattern is then used with the vehicle sensor

In a further embodiment of the above, the map location determining step includes receiving GNSS data for the vehicle.

In a further embodiment of any of the above, the map location determining step includes inferring the map location by referencing at least one of anti-lock braking system data, inertial measurement unit data, wheel rotation data, vehicle speed data, and/or steering data.

In a further embodiment of any of the above, the sensor antenna is a V2X sensor antenna, a V2V sensor antenna, a V2I sensor antenna, a V2P sensor antenna, a V2N sensor antenna, a C-V2X sensor antenna, a C-V2V sensor antenna, a C-V2I sensor antenna, a C-V2P sensor antenna, and/or a C-V2N sensor antenna.

In a further embodiment of any of the above, the plurality of predetermined antenna beam patterns excludes an omnidirectional antenna beam pattern and a steered or transient antenna beam pattern.

In a further embodiment of any of the above, the map location determining step includes determining a contextual vehicle environment.

In a further embodiment of any of the above, the contextual vehicle environment relates to a transitory vehicle condition.

In a further embodiment of any of the above, the transitory vehicle condition relates to object crowding around the vehicle.

In a further embodiment of any of the above, the first predetermined antenna pattern is used in a first transitory vehicle condition. The second predetermined antenna pattern is used in a second transitory vehicle condition.

In a further embodiment of any of the above, the transitory vehicle condition is determined based upon transitions from at least one of a highway, an intersection, a bridge, a tunnel, and/or a traffic signal.

In a further embodiment of any of the above, the transitory vehicle condition is an indeterminate vehicle condition. The second predetermined antenna beam pattern is an omnidirectional antenna beam pattern.

In a further embodiment of any of the above, the contextual vehicle environment relates to an amount of vehicle obstructions. The plurality of antenna beam patterns relate to map locations associated with urban conditions and rural conditions.

In a further embodiment of any of the above, the sensor antenna is a GNSS sensor antenna.

In a further embodiment of any of the above, the second predetermined antenna beam pattern for the urban condition is focused upward to avoid multipath reflections from buildings compared to the first predetermined antenna beam pattern.

In a further embodiment of any of the above, the second predetermined antenna beam pattern for the urban condition provides increased gain toward directly-visible satellites while disregarding lower-elevation satellites in GNSS almanac data compared to the first predetermined antenna beam pattern.

In a further embodiment of any of the above, the second predetermined antenna beam pattern for the rural condition includes using an array of antennas for the GNSS sensor antenna to increase inclusivity toward horizons compared to the first predetermined antenna beam pattern which uses one or more antennas that are different than the array.

In a further embodiment of any of the above, the urban condition and rural conditions are differentiated from one another based upon an amount of lateral obstructions around the vehicle.

In a further embodiment of any of the above, the lateral obstructions are within 100 yards of the vehicle.

In a further embodiment of any of the above, the lateral obstructions obstruct at least 25% of the first predetermined beam pattern.

In a further embodiment of any of the above, a controller is programmed to perform the vehicle sensor antenna optimization steps.

### BRIEF DESCRIPTION OF THE DRAWINGS

The disclosure can be further understood by reference to the following detailed description when considered in connection with the accompanying drawings wherein:
Figure 1 is a schematic view of an example system used to adjust beam pattern of vehicle sensors.
Figure 2 is a flowchart depicting an example beam pattern matching algorithm.
Figure 3 illustrates one example beam pattern.
Figure 4 illustrates another example beam pattern.
Figure 5 illustrates an example beam pattern for an intersection.
Figure 6 illustrates an omnidirectional beam pattern for a vehicle loss of control condition.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible. Like reference numbers and designations in the various drawings indicate like elements.

### DETAILED DESCRIPTION

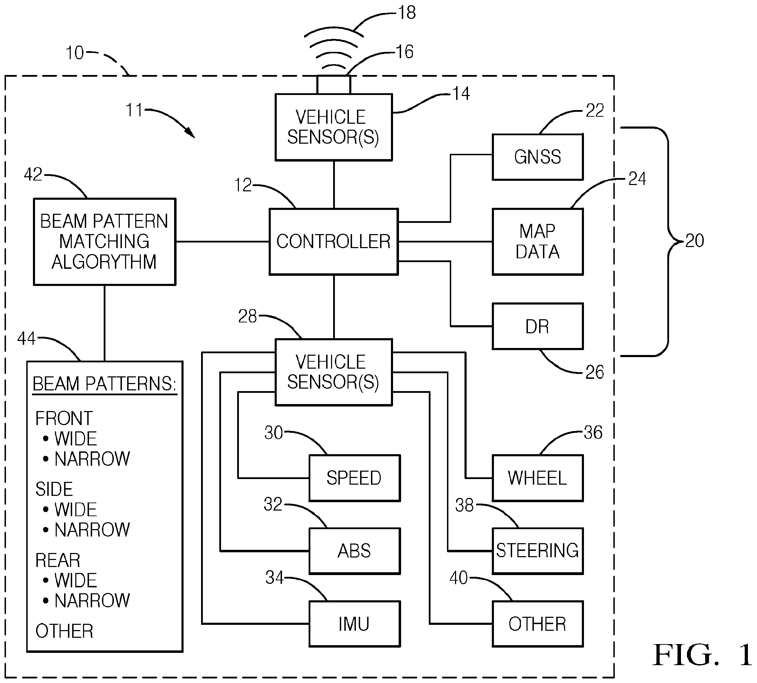

An example vehicle system 10 is schematically illustrated in Figure 1. The system 10 includes a controller 12 in communication with a variety of components that provide driver assist features. The controller 12 may include one or more processors that may be separate or integrated units.

One or more vehicles sensors 14 are in communication with the controller 12 and include at least one of a V2X, V2V, V2I, V2P, V2N, C-V2X, C-V2V, C-V2I, C-V2P, and/or C-V2N transceiver (the at least one sensor collectively and generally referred to as "V2X"), which include an antenna 16 for interactive communication with the vehicle's surroundings. The antenna 16 sends data to and/or receives data from the surrounding environment using a signal 18. The vehicle sensor 14 or group of vehicle sensors can be configured to provide a preconfigured fixed beam pattern. There may be other vehicle sensors, such as LIDAR, ultrasonic sensors, and/or video cameras.

Vehicle position may be provided to the controller 12 using one or more navigation systems 20 that include a global navigation satellite system (GNSS) 22, map data 24, and/or dead-reckoning 26. Vehicle map location is determined based upon the data received from the antenna of the GNSS system 22. The navigation systems 20 may work with the vehicle sensors 14 to correlate the position of the vehicle to, for example, a location on a map relative to the map data 24. The map data 24 may include such information as elevation, building locations and dimensions, roadway type, driveway locations, overpasses, intersections, and/or other useful environmental information.

The antenna used in each of the V2X transceiver and the GNSS system may be provided by a single antenna or an array of antennas. These antenna(s) may be operated in such a manner so as to provide a desired beam pattern. Thus, "antenna" as used in this disclosure is intended to include one or more antennas that operate in a coordinated manner to achieve a desired beam pattern for the device.

The controller 12 is also in communication with various other vehicle sensors 28 that cooperate to aid the driver in operating the vehicle, such as providing brake assist, steering assist, and automated cruise control. The vehicle sensors 28 provide signals over the vehicle CAN bus such as vehicle speed 30, ABS data 32, inertial measurement unit (IMU) data 34, wheel ticks 36, steering data 38 and/or other information 40. Various other assist or control systems may be provided in the vehicle 10 to provide improved vehicle performance and/or safety. If desired, the vehicle map location and/or map data may be inferred by referencing one or more of these vehicle sensors 28.

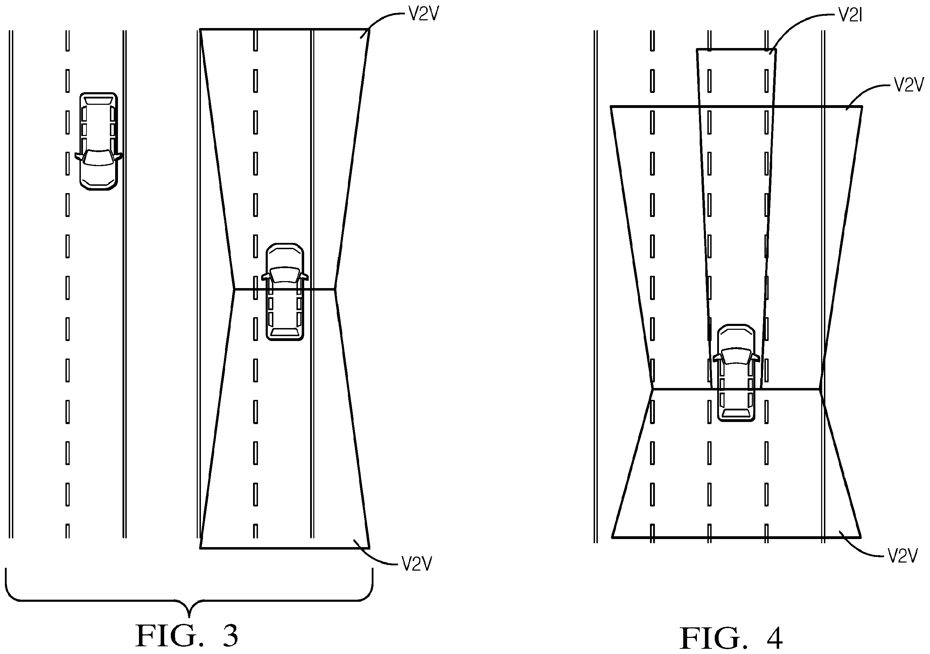

According to the disclosure, the problem of sub-optimal V2X and/or GNSS antenna patterns is addressed by adjusting the pattern of one or more antennas based on map and/or sensor data. For example, when map data indicates highway driving is in process, the antenna pattern will be focused into a narrower, higher-gain forward and rearward pattern with little gain "wasted" on the sides of the vehicle due to the absence of sideward hazards (Fig. 3). This provides greater communication range at highway speeds compared to existing omnidirectional antennas.

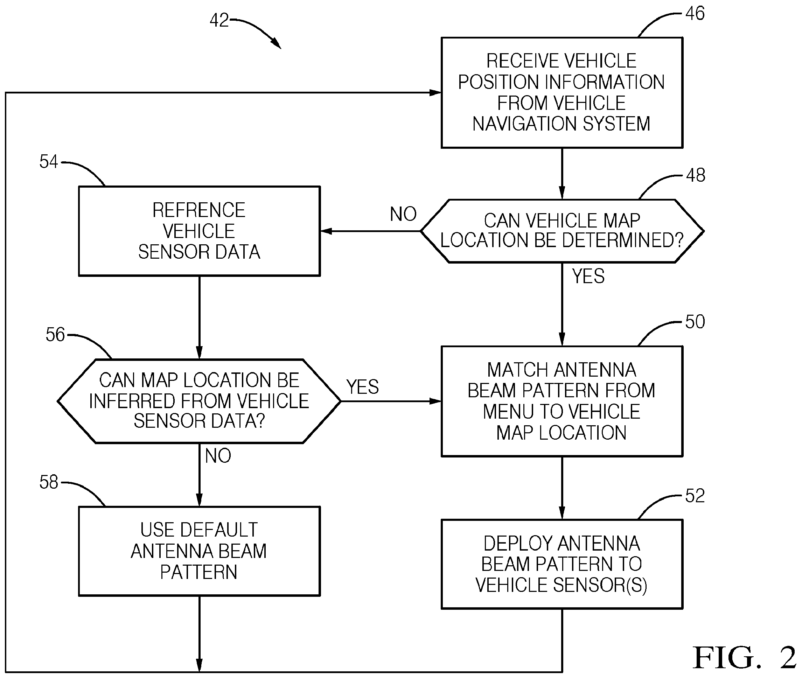

The controller 12 uses a beam pattern matching algorithm 42 (Fig. 2) to select a fixed beam pattern from a menu 44 that includes a plurality of predetermined antenna beam patterns for the antenna 16 of the vehicle sensor(s) 14. The plurality of predetermined antenna beam patterns excludes an omnidirectional antenna beam pattern and a steered or transient antenna beam pattern. The fixed beam pattern is selected based upon the vehicle position relative to map data 24. The antenna beam pattern can be optimized to focus transmitting and receiving power toward regions of interest based upon the map data 24. Selectable fixed beam patterns extend communication range in the regions of interest while ignoring regions with no targets of interest. This may also improve coexistence across multiple radios in a vehicle.

The problem of co-existence is improved by optimizing beam patterns for the application, thus minimizing the interference between radios. For example, when a map indicates the vehicle is approaching toll plaza, or when communication from the toll plaza is detected, the antenna assigned to the radio communicating with the toll plaza can be focused very narrowly toward the plaza antenna (Fig. 4), thus reducing interference with other radio(s) communicating with vehicles or other infrastructure. In general, multiple directional antennas (optimized beams) on a vehicle can reduce interference between radios when compared with multiple omnidirectional antennas on the same vehicle.

Similarly, fixed antenna beam patterns may be applied to the GNSS antenna. Selectable GNSS patterns minimize multipath effects in urban canyons or downtown areas while maximizing satellite visibility in open-sky scenarios. That is, the map data 24 includes information relating to the satellite visibility for the map location, which enables the beam pattern matching algorithm to select the desired beam pattern.

When the vehicle location cannot be discerned relative to the map data 24 from the vehicle navigation systems such as GNSS 24, the vehicle location may be discerned from vehicle sensors 28 (e.g., information 30-40). For example, high-speed, straight-line driving or cruise control usage may indicate highway driving that is likely open-sky. Low-speed, stop- and-go driving may indicate urban areas that may have GNSS satellite blockages. Turn signal usage may be indicative of an upcoming intersection. When available, LIDAR data provides a more accurate survey of the vehicle's surroundings.

In operation, a vehicle sensor antenna (i.e., the V2X antenna and/or GNSS antenna) is optimized during its usage, as generally indicated at 42 in the flow chart shown in Figure 2. The sensor antenna uses a first predetermined antenna beam pattern from a plurality of predetermined antenna beam patterns during a first mode of operation. Vehicle position information is received (block 46), and a map location of the vehicle is determined during vehicle operation either directly from the navigation system or inferentially from the vehicle sensors 28 (block 48). A second predetermined antenna beam pattern is selected from the plurality of predetermined antenna beam patterns based upon the map location of the vehicle during a second mode of operation (block 50). The second predetermined antenna beam pattern is then used with the vehicle sensor (block 52).

If the map location is not discernible from the vehicle navigation systems (e.g., GNSS), then the vehicle sensors 28 are referenced (block 54) and the map location/map data is inferred from vehicle sensor data (block 56). If the map location is inferred, then the second predetermined antenna beam pattern from the menu 44 is matched to the map location of the vehicle (block 50) and the antenna beam pattern is deployed to the antenna 16 (block 52). If map location cannot be inferred from the vehicle sensors 28, then a default antenna beam pattern may be used (block 58; e.g., omni-directional) until the vehicle location can be determined directly or indirectly.

In an example, the map location is determined based upon a contextual vehicle environment that relates to a transitory vehicle condition. A switch between beam patterns occurs, for example, when the vehicle's surroundings have changed in such a manner that the effectiveness of the first predetermined antenna beam pattern has been degraded or is comparatively less desirable than the second predetermined antenna beam pattern. Thus, the first predetermined antenna pattern is used in a first transitory vehicle condition, and the second predetermined antenna pattern is used in a second transitory vehicle condition.

Example transitory vehicle conditions include object crowding around the vehicle and/or transitions from at least one of a highway, an intersection, a bridge, a tunnel, and/or a traffic signal.

High speeds typically require greater forward/rearward range. Referring to Figure 3, vehicles traveling in the opposite direction are not of interest. Generally objects to the sides of the vehicles are not of interest, so a desired beam pattern for highways in the map data is a narrow forward and rearward beam.

Referring to Figure 4, when infrastructure such as a toll plaza is approaching according to map data 24, the V2I antenna pattern can be very narrow and focused higher than the V2V antennas. Focused pattern allows lower power and less impact on V2V radios if radios are operating asynchronously (likely the case if more than two radios are used), thus improving coexistence.

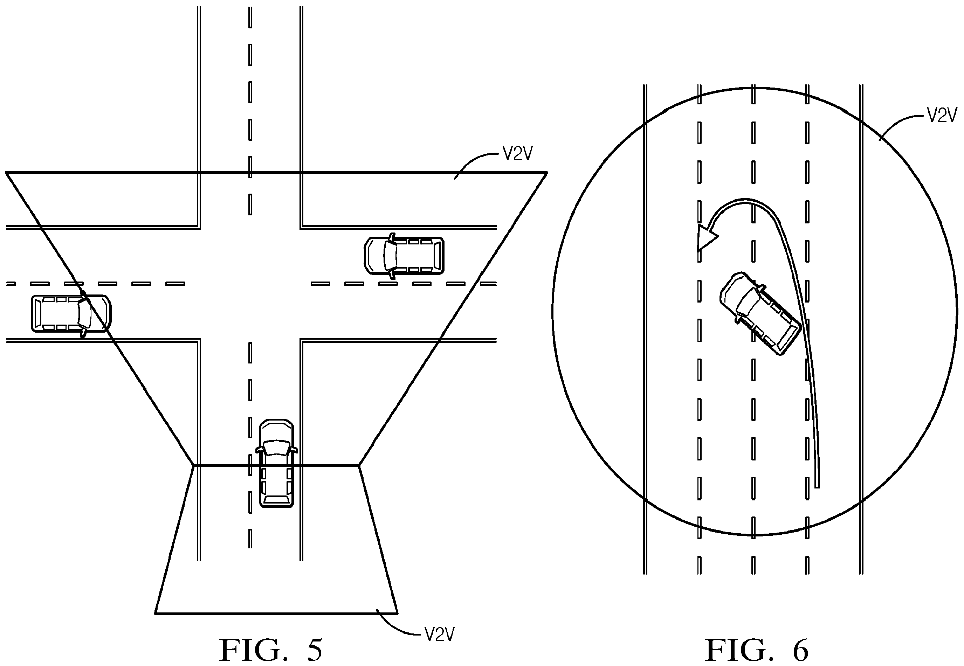

Referring to Figure 5, at intersections the V2X antenna pattern will be broadened to enhance vehicle communication to/from vehicles on cross streets (i.e. vehicles approaching from the left and right of the host vehicle). Broader forward-looking pattern are desired to "see" around corners. Rearward pattern can remain narrower and longer-range. There are generally no objects of interest to the immediate sides of the vehicles. A similar beam pattern can be used when approaching a roundabouts.

When map data is not available, driving conditions may be discerned from vehicle sensor data. For example, high-speed, straight-line driving may indicate highway driving that is likely open-sky and lacking sideward hazards. Vehicle turns, which can be determined by yaw rate calculated from IMU, wheel tick, or other data, may indicate an intersection.

In some instances, vehicle sensor data takes precedence over map data, even if that map data is available. The transitory vehicle condition may be an indeterminate vehicle condition. For example, in a control loss situation, again determined by yaw rate or anti-lock brake data, an omnidirectional antenna pattern is used. Referring to Figure 6, in such a scenario the second predetermined antenna beam pattern is an omnidirectional antenna beam pattern when the transitory vehicle condition is indeterminate. Control loss is determined, for example, from vehicle sensors such as ABS, IMU, and/or wheel ticks, for example.

When a vehicle is stopped, as determined by GNSS, wheel ticks, or other data, as well as emergency flasher status, the antenna pattern can be determined based on the confidence in the vehicle orientation with respect to the roadway traffic pattern. An omnidirectional pattern is used when the orientation of the vehicle cannot be determined.

In another example, the contextual vehicle environment relates to an amount of vehicle obstructions, and the plurality of antenna beam patterns relate to map locations associated with urban conditions and rural conditions. In regards to GNSS antenna optimization, when map data indicates an urban area with taller buildings, GNSS performance is enhanced. The urban condition and rural conditions could be differentiated from one another, for example, based upon an amount of lateral obstructions around the vehicle. In one example configuration, the lateral obstructions are within 100 yards of the vehicle, and in another example configuration, the lateral obstructions obstruct at least 25% of the first predetermined beam pattern.

In urban areas, lower elevation signals are disregarded, which are likely multipath, and the antenna is focused upward. First, the antenna pattern is focused upward to minimize the impact of multipath reflections from buildings while increasing the gain toward directly-visible satellites. This may be achieved, for example, by using an array of antennas. Second, a heuristic algorithm is used to disregard lower-elevation satellites in the GNSS almanac data as any signals from those satellites will be received via multipath reflections rather than directly. Satellites that are directly visible can be determined based on building height data in the map database.

In rural areas, satellite visibility toward the horizons is maximized. For example, the second predetermined antenna beam pattern for the rural condition includes using an array of antennas for the GNSS sensor antenna to maximize satellite visibility toward horizons compared to the first predetermined antenna beam pattern which uses one or more antennas that are different than the array. A single patch antenna, for example has a relatively strong sensitivity directly upward, which is more useful for rural areas. This single antenna arrangement still has good horizonward performance by increased inclusivity toward the horizon without degrading important higher-elevation sensitivity. When an array of antennas are employed, a narrower upward beam is generated, which may be more useful in urban environments where lower-elevation satellites may be obscured by buildings.

The following are some examples, in accordance with techniques of this disclosure:
Example 1. A method of optimizing a sensor antenna for a vehicle comprising:
   operating a sensor antenna using a first predetermined antenna beam pattern from a plurality of predetermined antenna beam patterns;
   determining a map location of a vehicle;
   selecting a second predetermined antenna beam pattern from the plurality of predetermined antenna beam patterns based upon the map location of the vehicle; and
   using the second predetermined antenna beam pattern with the vehicle sensor.
Example 2. The method of any other example, wherein the map location determining step includes receiving GNSS data for the vehicle.
Example 3. The method of any other example, wherein the map location determining step includes inferring the map location by referencing at least one of anti-lock braking system data, inertial measurement unit data, wheel rotation data, vehicle speed data, and/or steering data.
Example 4. The method of any other example, wherein the sensor antenna is at least one of a V2X sensor antenna, a V2V sensor antenna, a V2I sensor antenna, a V2P sensor antenna, a V2N sensor antenna, a C-V2X sensor antenna, a C-V2V sensor antenna, a C-V2I sensor antenna, a C-V2P sensor antenna, and/or a C-V2N sensor antenna.
Example 5. The method of any other example, wherein the plurality of predetermined antenna beam patterns excludes an omnidirectional antenna beam pattern and a steered or transient antenna beam pattern.
Example 6. The method of any other example, wherein the map location determining step includes determining a contextual vehicle environment.
Example 7. The method of any other example, wherein the contextual vehicle environment relates to a transitory vehicle condition.
Example 8. The method of any other example, wherein the transitory vehicle condition relates to object crowding around the vehicle.
Example 9. The method of any other example, wherein the first predetermined antenna pattern is used in a first transitory vehicle condition, and the second predetermined antenna pattern is used in a second transitory vehicle condition.
Example 10. The method of any other example, wherein the transitory vehicle condition is determined based upon transitions from at least one of a highway, an intersection, a bridge, a tunnel, and/or a traffic signal.
Example 11. The method of any other example, wherein the transitory vehicle condition is an indeterminate vehicle condition, and the second predetermined antenna beam pattern is an omnidirectional antenna beam pattern.
Example 12. The method of any other example, wherein the contextual vehicle environment relates to an amount of vehicle obstructions, and the plurality of antenna beam patterns relate to map locations associated with urban conditions and rural conditions.
Example 13. The method of any other example, wherein the sensor antenna is a GNSS sensor antenna.
Example 14. The method of any other example, wherein the second predetermined antenna beam pattern for the urban condition is focused upward to avoid multipath reflections from buildings compared to the first predetermined antenna beam pattern.
Example 15. The method of any other example, wherein the second predetermined antenna beam pattern for the urban condition provides increased gain toward directly-visible satellites while disregarding lower-elevation satellites in GNSS almanac data compared to the first predetermined antenna beam pattern.
Example 16. The method of any other example, wherein the second predetermined antenna beam pattern for the rural condition includes using an array of antennas for the GNSS sensor antenna to increase inclusivity toward horizons compared to the first predetermined antenna beam pattern which uses one or more antennas that are different than the array.
Example 17. The method of any other example, wherein the urban condition and rural conditions are differentiated from one another based upon an amount of lateral obstructions around the vehicle.
Example 18. The method of any other example, wherein the lateral obstructions are within 100 yards of the vehicle.
Example 19. The method of any other example, wherein the lateral obstructions obstruct at least 25% of the first predetermined beam pattern.
Example 20. A controller programmed to perform the steps of the method of any other example.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A method of optimizing a sensor antenna for a vehicle comprising:
operating a sensor antenna using a first predetermined antenna beam pattern from a plurality of predetermined antenna beam patterns;
determining a map location of a vehicle;
selecting a second predetermined antenna beam pattern from the plurality of predetermined antenna beam patterns based upon the map location of the vehicle; and
using the second predetermined antenna beam pattern with the vehicle sensor.

2. The method of claim 1, wherein the map location determining step includes receiving GNSS data for the vehicle.

3. The method of claim 1 or 2, wherein the map location determining step includes inferring the map location by referencing at least one of anti-lock braking system data, inertial measurement unit data, wheel rotation data, vehicle speed data, and/or steering data.

4. The method of any of claims 1-3, wherein the sensor antenna is at least one of a V2X sensor antenna, a V2V sensor antenna, a V2I sensor antenna, a V2P sensor antenna, a V2N sensor antenna, a C-V2X sensor antenna, a C-V2V sensor antenna, a C-V2I sensor antenna, a C-V2P sensor antenna, and/or a C-V2N sensor antenna.

5. The method of any of claims 1-4, wherein the plurality of predetermined antenna beam patterns excludes an omnidirectional antenna beam pattern and a steered or transient antenna beam pattern.

6. The method of any of claims 1-5, wherein the map location determining step includes determining a contextual vehicle environment.

7. The method of claim 6, wherein the contextual vehicle environment relates to a transitory vehicle condition.

8. The method of claim 7, wherein the transitory vehicle condition relates to object crowding around the vehicle.

9. The method of claim 7 or 8, wherein the first predetermined antenna pattern is used in a first transitory vehicle condition, and the second predetermined antenna pattern is used in a second transitory vehicle condition.

10. The method of claim 9, wherein the transitory vehicle condition is determined based upon transitions from at least one of a highway, an intersection, a bridge, a tunnel, and/or a traffic signal.

11. The method of any of claims 7-10, wherein the transitory vehicle condition is an indeterminate vehicle condition, and the second predetermined antenna beam pattern is an omnidirectional antenna beam pattern.

12. The method of any of claims 7-11, wherein the contextual vehicle environment relates to an amount of vehicle obstructions, and the plurality of antenna beam patterns relate to map locations associated with urban conditions and rural conditions.

13. The method of claim 12, wherein the sensor antenna is a GNSS sensor antenna.

14. A controller programmed to perform the steps of the method of any of claims 1-13.

15. A system comprising means for performing the steps of the method of any of claims 1-13.
